# EUROPEAN PATENT APPLICATION

(11) **EP 4 842 088 A1**
(43) Date of publication of application: **18.11.2026**
(21) Application number: 24915956.7
(22) Date of filing: 09.01.2024
(51) Int. Cl.: H04W 56/00

(54) **METHOD FOR SENDING SYNCHRONIZATION INFORMATION, AND APPARATUS, DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2024/071466
(87) International publication number: WO 2025/147875

(57) **Abstract**

A method for sending synchronization information, and an apparatus, a device and a storage medium. The method for sending synchronization information comprises: receiving first configuration information sent by a network device, wherein the first configuration information is used for configuring a trigger condition, which is used for triggering a terminal to send synchronization information of at least two quality-of-service (QoS) flows to the network device; and when the trigger condition is met, sending the synchronization information of the at least two QoS flows to the network device. By means of the method, when a trigger condition is met, a terminal reports synchronization information between QoS is reported to a network device, such that the occasion of the terminal reporting the synchronization information is reasonable, and signaling overheads can be saved on compared with a periodic reporting mode.

## Description

### TECHNICAL FIELD

The present disclosure relates to the communication technical field, and in particular to a method for sending synchronization information, an apparatus, a device, and a storage medium.

### BACKGROUND

The Quality of Service (QoS) model in the 5^{th} Generation Mobile Communication Technology (5G) is based on a QoS flow. In the Non-Access Stratum (NAS), a QoS flow is the smallest granularity in a Protocol Data Unit (PDU) session that can distinguish QoS. A QoS flow may be identified by a QoS flow identifier (QoS Flow ID, QFI) in a header.

A multi-modality communication service may be applied to multiple technical fields, such as industry, robotics, telepresence, virtual reality, augmented reality, healthcare, road transportation, gaming, education, culture, and smart grids. Applications supported by the multi-modality communication service may have inputs from multiple sources and/or have outputs to multiple destinations, thus delivering information more efficiently.

The multi-modality communication service involves data of different modalities, such as video data, audio data, tactile data, and sensor data. The video data may be video data captured and transmitted in real-time by a mobile phone, or may be video data that has undergone edition processing. The audio data may be audio data recorded and transmitted in real-time by a mobile phone, or may be audio data that has undergone edition processing. Tactile data may be the sensation of touching a surface (such as pressure, texture, vibration, temperature, etc.), or kinesthetic sensation (such as gravity, tension, sense of position, etc.). The sensor data may be ambient information received by sensors (such as brightness, temperature, humidity, etc.).

When the multi-modality communication service is applied to virtual reality, data from different dimensions may form multiple QoS flows. The synchronization between these multiple QoS flows is crucial to avoid a negative impact on the user experience (i.e., viewers may find lack of synchronization between the data from different dimensions).

### SUMMARY

To optimize a synchronization mechanism between multiple QoS flows, embodiments of the present disclosure provide a method for sending synchronization information, an apparatus, a device, and a storage medium.

According to a first aspect of an embodiment of the present disclosure, a method for sending synchronization information is provided. The method is performed by a terminal. The following is included:
receiving first configuration information sent by a network device, where the first configuration information is used to configure a trigger condition, and the trigger condition is used to trigger the terminal to send synchronization information for at least two Quality of Service QoS flows to the network device; and
in a case that the trigger condition is satisfied, sending the synchronization information for the at least two Quality of Service QoS flows to the network device.

According to a second aspect of an embodiment of the present disclosure, a method for sending synchronization information is provided. The method is performed by a network device. The following is included:
sending first configuration information to a terminal, where the first configuration information is used to configure a trigger condition, and the trigger condition is used to trigger the terminal to send synchronization information for at least two Quality of Service QoS flows to the network device; and
receiving the synchronization information for the at least two Quality of Service QoS flows sent by the terminal.

According to a third aspect of an embodiment of the present disclosure, a communication apparatus is provided. The apparatus is configured in a terminal. The apparatus includes:
a transceiving module configured to: receive first configuration information sent by a network device, where the first configuration information is used to configure a trigger condition, and the trigger condition is used to trigger the terminal to send synchronization information for at least two Quality of Service QoS flows to the network device; and
in a case that the trigger condition is satisfied, send the synchronization information to the network device.

According to a fourth aspect of an embodiment of the present disclosure, a communication apparatus is provided. The apparatus is configured in a network device. The apparatus includes:
a transceiving module configured to: send first configuration information to a terminal, where the first configuration information is used to configure a trigger condition, and the trigger condition is used to trigger the terminal to send synchronization information for at least two Quality of Service QoS flows to the network device; and receive the synchronization information for the at least two Quality of Service QoS flows sent by the terminal.

According to a fifth aspect of an embodiment of the present disclosure, one or more processors are provided; the processors are used to perform the method described in the first aspect of an embodiment of the present disclosure.

According to a sixth aspect of an embodiment of the present disclosure, one or more processors are provided; the processors are used to perform the method described in the second aspect of an embodiment of the present disclosure.

According to a seventh aspect of an embodiment of the present disclosure, a communication system is provided, including a terminal and a network device. The terminal is configured to implement the method described in the first aspect of an embodiment of the present disclosure, and the network device is configured to implement the method described in the second aspect of an embodiment of the present disclosure.

According to an eighth aspect of an embodiment of the present disclosure, a storage medium is provided that stores instructions. When the instructions are run on a communication device, the communication device is caused to perform the method described in the first or second aspect of embodiments of the present disclosure.

In the methods provided by the embodiments of the present disclosure, by setting the trigger condition, the terminal reports synchronization information for QoS to the network device when the trigger condition is satisfied, making the timing of the terminal reporting the synchronization information reasonable, which can save signaling overhead compared to a periodic reporting method.

### BRIEF DESCRIPTION OF THE DRAWINGS

To more clearly illustrate the technical solutions in the embodiments of the present disclosure, the accompanying drawings required for the description of the embodiments are introduced below. The following drawings are only some embodiments of the present disclosure and do not impose specific limitations on the protection scope of the present disclosure.
FIG. 1 is a schematic diagram of a communication system architecture according to an embodiment of the present disclosure.
FIG. 2A to FIG. 2B are schematic diagrams illustrating interaction(s) for sending synchronization information according to embodiments of the present disclosure.
FIG. 3A to FIG. 3D are flowcharts illustrating sending of synchronization information according to embodiments of the present disclosure.
FIG. 4 is a flowchart illustrating sending of synchronization information according to an embodiment of the present disclosure.
FIG. 5A to FIG. 5B are structural diagrams of a communication apparatus according to embodiments of the present disclosure.
FIG. 6A to FIG. 6B are structural diagrams of a communication apparatus according to embodiments of the present disclosure.

### DETAILED DESCRIPTION

Embodiments of the present disclosure provide a method for sending synchronization information, an apparatus, a device, and a storage medium.

In a first aspect, an embodiment of the present disclosure provides a method for sending synchronization information. The method is performed by a terminal. The method includes:
receiving first configuration information sent by a network device, where the first configuration information is used to configure a trigger condition, and the trigger condition is used to trigger the terminal to send synchronization information for at least two Quality of Service QoS flows to the network device; and
in a case that the trigger condition is satisfied, sending the synchronization information for the at least two Quality of Service QoS flows to the network device.

In the above embodiment, by setting the trigger condition, the terminal reports the synchronization information for QoS to the network device when the trigger condition is satisfied, making the timing of the terminal reporting the synchronization information reasonable, and thus saving signaling overhead compared to a periodic reporting method.

In conjunction with some embodiments of the first aspect, in some embodiments, the first configuration information includes: identifiers of at least two QoS flows and at least one threshold.

In conjunction with some embodiments of the first aspect, in some embodiments, when the first configuration information includes identifiers of two QoS flows and one threshold, the trigger condition being satisfied includes one of the following:
a time difference, by which data of a first QoS flow is later than data of a second QoS flow, being greater than or equal to the threshold;
a time difference, by which the data of the second QoS flow is later than the data of the first QoS flow, being greater than or equal to the threshold;
where the first QoS flow and the second QoS flow are two QoS flows corresponding to the identifiers of the two QoS flows.

In the above embodiments, configuring a symmetric threshold can save signaling overhead.

In conjunction with some embodiments of the first aspect, in some embodiments, when the first configuration information includes identifiers of two QoS flows and two thresholds, the trigger condition being satisfied includes one of the following:
a time difference, by which data of a first QoS flow is later than data of a second QoS flow, being greater than or equal to one of the two thresholds;
a time difference, by which the data of the second QoS flow is later than the data of the first QoS flow, being greater than or equal to the other of the two thresholds;
where the first QoS flow and the second QoS flow are two QoS flows corresponding to the identifiers of the two QoS flows.

In the above embodiments, configuring two asymmetric thresholds can improve the reporting accuracy.

In conjunction with some embodiments of the first aspect, in some embodiments, when the first configuration information includes identifiers of two QoS flows and two thresholds, the trigger condition being satisfied includes at least one of:
a time difference, by which data of a third QoS flow is later than data of a fourth QoS flow, being greater than or equal to the first one of the two thresholds;
a time difference, by which the data of the fourth QoS flow is later than the data of the third QoS flow, being greater than or equal to the second one of the two thresholds;
where the third QoS flow is a QoS flow with the smallest identifier among two QoS flows corresponding to the identifiers of the two QoS flows, and the fourth QoS flow is a QoS flow with the largest identifier among the two QoS flows corresponding to the identifiers of the two QoS flows.

In conjunction with some embodiments of the first aspect, in some embodiments, when the first configuration information includes identifiers of at least three QoS flows and at least one threshold, each threshold corresponds to a time difference of data between two QoS flows.

In conjunction with some embodiments of the first aspect, in some embodiments, the identifiers of the two QoS flows corresponding to the threshold are determined based on the following parameter(s):
a position of the threshold in the ranking of the at least one threshold;
the number of identifiers of the at least three QoS flows;
the ranking of the identifiers of the at least three QoS flows.

In conjunction with some embodiments of the first aspect, in some embodiments, the trigger condition being satisfied includes: a time difference between any two QoS flows among three QoS flows corresponding to the identifiers of the at least three QoS flows is greater than or equal to a threshold corresponding to the any two QoS flows.

In conjunction with some embodiments of the first aspect, in some embodiments, first data of one of the two QoS flows has been fully sent to a MAC layer, and second data of the other one of the two QoS flows has not been fully sent to the MAC layer, the first data corresponds to the second data, and the time difference between the two QoS flows is:
a difference between current time and the time when the first data of the one of the two QoS flows is fully sent to the MAC layer;
or, a difference between the current time and the time when the first data of the one of the two QoS flows is sent over an air interface.

In conjunction with some embodiments of the first aspect, in some embodiments, the time difference is determined according to feedback information, the feedback information is used to indicate whether data of the QoS flow is successfully received, and the feedback information including at least one of:
Hybrid Automatic Repeat Request-ACKnowledgment HARQ ACK feedback information;
Radio Link Layer Control Protocol Acknowledged Mode RLC AM status report;
Packet Data Convergence Protocol PDCP status Report.

In conjunction with some embodiments of the first aspect, in some embodiments, the synchronization information includes at least one of:
an identifier of a QoS flow satisfying the trigger condition;
information of a time difference between QoS flows satisfying the trigger condition;
a data volume of a QoS flow satisfying the trigger condition.

In conjunction with some embodiments of the first aspect, in some embodiments, the synchronization information includes at least one of:
an identifier of a Data Radio Bearer DRB, where the DRB includes QoS flow(s) satisfying the trigger condition;
information of a time difference between QoS flows satisfying the trigger condition;
data volume(s) of QoS flow(s) satisfying the trigger condition in the DRB.

In conjunction with some embodiments of the first aspect, in some embodiments, the synchronization information includes at least one of:
an identifier of a Logical Channel Group LCG, where the LCG includes QoS flow(s) satisfying the trigger condition;
information of a time difference between QoS flows satisfying the trigger condition;
data volume(s) of QoS flow(s) satisfying the trigger condition in the LCG.

In conjunction with some embodiments of the first aspect, in some embodiments, the information of the time difference is a numerical value of the time difference between the QoS flows satisfying the trigger condition, or the information of the time difference is time difference-related information, and the time difference-related information is a difference between the time difference and a corresponding threshold.

In conjunction with some embodiments of the first aspect, in some embodiments, the synchronization information includes a piece of time difference information, which is calculated based on multiple time differences.

In conjunction with some embodiments of the first aspect, in some embodiments, the synchronization information includes multiple pieces of time difference information and multiple data volumes corresponding to the pieces of time difference information.

In conjunction with some embodiments of the first aspect, in some embodiments, the first configuration information is further used to configure enable indication information, and the enable indication information is used to indicate that the trigger condition is enabled.

In conjunction with some embodiments of the first aspect, in some embodiments, the first configuration information is further used to configure the trigger condition and a disable indication, and the disable indication is used to indicate that the trigger condition is disabled.

In conjunction with some embodiments of the first aspect, in some embodiments, the method further includes:
receiving second configuration information sent by the network device, where the second configuration information is used to configure a duration of a timer, the timer is used to prohibit a trigger condition related to at least one QoS flow, and the terminal has sent synchronization information for the at least one QoS flow and other QoS flow(s) within a first duration prior to the current time moment.

In conjunction with some embodiments of the first aspect, in some embodiments, sending the synchronization information for the at least two Quality of Service QoS flows to the network device includes:
sending Radio Link Control RRC signaling, where the RRC signaling includes the synchronization information for the at least two Quality of Service QoS flows.

In conjunction with some embodiments of the first aspect, in some embodiments, sending the synchronization information for the at least two Quality of Service QoS flows to the network device includes:
sending a Media Access Control Control Element MAC CE, where the MAC CE includes the synchronization information for the at least two Quality of Service QoS flows.

In conjunction with some embodiments of the first aspect, in some embodiments, a MAC header corresponding to the MAC CE indicates a new Logical Channel Identifier LCID, which is used to indicate that the MAC CE is used to send the synchronization information for the at least two Quality of Service QoS flows.

In conjunction with some embodiments of the first aspect, in some embodiments, the MAC header corresponding to the MAC CE includes a new eLCID, which is used to indicate that the MAC CE is used to send the synchronization information for the at least two Quality of Service QoS flows.

In conjunction with some embodiments of the first aspect, in some embodiments, the method further includes:
determining a priority of the MAC CE in logical channel prioritization as specified in a protocol.

In conjunction with some embodiments of the first aspect, in some embodiments, sending the synchronization information for the at least two Quality of Service QoS flows to the network device in a case that the trigger condition is satisfied includes:
in a case that the trigger condition is satisfied, generating a report, where the report includes the synchronization information for the at least two Quality of Service QoS flows; and
sending the generated report to the network device.

In conjunction with some embodiments of the first aspect, in some embodiments, the method further includes:
canceling sending the generated report in a case that one of the following is fulfilled:
a Service Data Unit SDU associated with the report having been discarded;
a MAC PDU being transmitted, and the MAC PDU including an SDU associated with the report;
a MAC PDU including a MAC CE for transmitting the synchronization information, and the MAC CE including an SDU associated with the report.

In conjunction with some embodiments of the first aspect, in some embodiments, the method further includes:
in a case of existence of at least one report that has been generated but not sent, if an Uplink Shared Channel UL-SCH for transmitting new data exists and the UL-SCH is capable of transmitting the MAC CE after running of Logical Channel Prioritization LCP, generating the MAC CE; if the UL-SCH does not exist and a current processing procedure does not include a pending scheduling request triggered by a logical channel corresponding to the report, triggering a scheduling request.

In a second aspect, an embodiment of the present disclosure provides a method for receiving synchronization information. The method is performed by a network device. The method includes:
sending first configuration information to a terminal, where the first configuration information is used to configure a trigger condition, and the trigger condition is used to trigger the terminal to send synchronization information for at least two Quality of Service QoS flows to the network device; and
receiving the synchronization information for the at least two Quality of Service QoS flows sent by the terminal.

In conjunction with some embodiments of the second aspect, in some embodiments, the first configuration information is further used to configure enable indication information, and the enable indication information is used to indicate that the trigger condition is enabled.

In conjunction with some embodiments of the second aspect, in some embodiments, the first configuration information is further used to configure the trigger condition and a disable indication, where the disable indication is used to indicate that the trigger condition is disabled.

In conjunction with some embodiments of the second aspect, in some embodiments, the method further includes:
sending second configuration information to the terminal, where the second configuration information is used to configure a duration of a timer, and the timer is used to disable a trigger condition related to at least one quality of service flow.

In conjunction with some embodiments of the second aspect, in some embodiments, receiving the synchronization information for the at least two Quality of Service QoS flows sent by the terminal includes:
receiving Radio Link Control RRC signaling, where the RRC signaling includes the synchronization information for the at least two Quality of Service QoS flows.

In conjunction with some embodiments of the second aspect, in some embodiments, receiving the synchronization information for the at least two Quality of Service QoS flows sent by the terminal includes:
receiving a Media Access Control Control Element MAC CE, where the MAC CE includes the synchronization information for the at least two Quality of Service QoS flows.

In a third aspect, an embodiment of the present disclosure provides a communication apparatus configured in a terminal. The apparatus includes:
a transceiving module configured to receive first configuration information sent by a network device, where the first configuration information is used to configure a trigger condition, and the trigger condition is used to trigger the terminal to send synchronization information for at least two Quality of Service QoS flows to the network device; and
in a case that the trigger condition is satisfied, send the synchronization information for the at least two Quality of Service QoS flows to the network device.

In a fourth aspect, an embodiment of the present disclosure provides a communication apparatus configured in a terminal. The apparatus includes:
a transceiving module configured to send first configuration information to a terminal, where the first configuration information is used to configure a trigger condition, and the trigger condition is used to trigger the terminal to send synchronization information for at least two Quality of Service (QoS) flows to the network device; and
receive the synchronization information for the at least two Quality of Service QoS flows sent by the terminal.

In a fifth aspect, an embodiment of the present disclosure provides a communication apparatus, including a processor and a memory;
the memory is used to store computer programs;
the processor is used to execute the computer programs to implement the method described in any one of embodiments of the first aspect.

In a sixth aspect, an embodiment of the present disclosure provides a communication apparatus, including a processor and a memory;
the memory is used to store computer programs;
the processor is used to execute the computer programs to implement the method described in any one of embodiments of the second aspect.

In a ninth aspect, an embodiment of the present disclosure provides a communication apparatus, including a processor and a memory;
the memory is used to store computer programs;
the processor is used to execute the computer programs to implement the method described in any one of embodiments of the third aspect.

In a tenth aspect, an embodiment of the present disclosure provides a communication system including a first device, a second device, and a third device. The first device is configured to perform the method described in the first aspect, the second device is configured to perform the method described in the second aspect, and the third device is configured to perform the method described in the third aspect.

In an eleventh aspect, an embodiment of the present disclosure provides a computer-readable storage medium storing instructions. When the instructions are called and executed on a computer, the computer is caused to perform the method as described in any one of embodiments of the first aspect, or the method as described in any one of embodiments of the second aspect, or the method as described in any one of embodiments of the third aspect.

In a twelfth aspect, an embodiment of the present disclosure provides a chip or chip system. The chip or chip system includes a processing circuit configured to perform the method described in accordance with the first or second aspect described above.

The embodiments of the present disclosure will now be further described in conjunction with the accompanying drawings and specific implementations.

Example embodiments will now be described in detail, examples of which are illustrated in the accompanying drawings. When the following description refers to the drawings, unless otherwise indicated, the same numerals in different drawings denote the same or similar elements. The implementations described in the following example embodiments do not represent all implementations consistent with the embodiments of the present disclosure. Rather, they are merely examples of devices and methods consistent with some aspects of the present disclosure as detailed in the appended claims.

The terms used in the embodiments of the present disclosure are for the purpose of describing particular embodiments only and are not intended to be limiting of the embodiments of the present disclosure. The singular forms "a/an" and "the" as used in the embodiments of the present disclosure and the appended claims are also intended to include plural forms unless the context clearly indicates otherwise. It should also be understood that the term "and/or" as used herein refers to and includes any or all possible combinations of one or more of associated listed items.

It should be understood that although the terms "first", "second", "third", etc., may be used to describe various information in embodiments of the present disclosure, such information should not be limited to these terms. These terms are only used to distinguish information of the same type from one another. For example, without departing from the scope of embodiments of the present disclosure, first indication information may also be referred to as second indication information, and similarly, second indication information may also be referred to as first indication information. Depending on the context, the words "if" and "in a case that" as used herein may be interpreted as "when", "at the time of...", or " in response to determining...".

Embodiments of the present disclosure are described in detail below, examples of which are illustrated in the accompanying drawings, where the same or similar reference numerals denote the same or similar elements throughout the drawings. The embodiments described below with reference to the accompanying drawings are illustrative and intended to explain the present disclosure, and should not be construed as limiting the present disclosure.

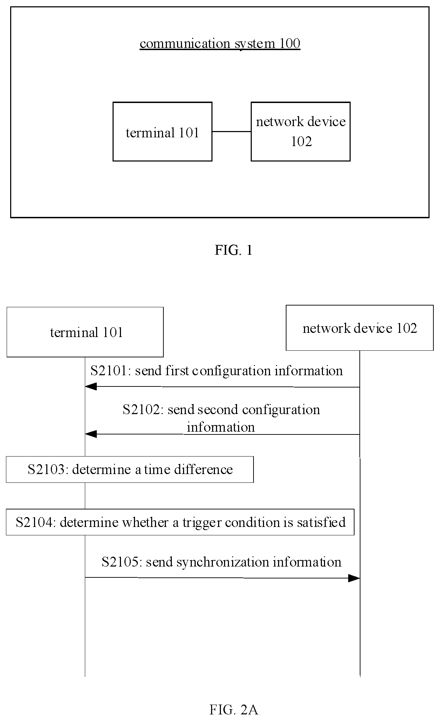

As shown in FIG. 1A, the method provided in the embodiments of the present application may be applied to a wireless communication system 100. The wireless communication system may include a terminal 101 and a network device 102. It should be noted that the wireless communication system 100 may also include other devices, and this application does not limit the devices included in the wireless communication system 100.

The wireless communication system 100 is applicable to both low-frequency and high-frequency scenarios. Application scenarios for the wireless communication system 100 include, but are not limited to: a Long Term Evolution (LTE) system, an LTE Frequency Division Duplex (FDD) system, an LTE Time Division Duplex (TDD) systems, a Worldwide interoperability for Microwave Access (WiMAX) communication system, a Cloud Radio Access Network (CRAN) system, a future 5th-generation (5G) system, a New Radio (NR) communication system, or a future evolved Public Land Mobile Network (PLMN) system, an Internet of Things system, etc.

The terminal 101 may be an access terminal, a terminal unit, a terminal station, a Mobile Station (MS), a remote station, a remote terminal, a mobile terminal, a wireless communication device, a terminal agent, an Internet of Things terminal, etc. The terminal 101 may have wireless transceiving capabilities, enabling it to communicate (e.g., via wireless communication) with one or more network devices in one or more communication systems and receive network services provided by the network device(s). The network device(s) includes(include) but not limited to the network device 102 shown in the figure. The terminal 101 may also be an Internet of Things terminal (Ambient-IoT). The Internet of Things terminal has lower complexity, manufacturing costs, and maintenance costs compared to ordinary terminals. The Internet of Things terminal may not require a battery and may be powered by receiving electromagnetic signals. The Internet of Things terminal may also have a battery with a small amount of energy storage capacity, and the battery does not require manual charging but obtains battery energy from external sources, such as from electromagnetic waves, heat, or kinetic energy, etc.

The network device 102 may be a base station, an intermediate node, a core network device, etc.

An embodiment of the present disclosure provides a method for sending synchronization information. FIG. 2A is a flowchart of a method for sending synchronization information according to an embodiment of the present disclosure. As shown in FIG. 2A, the method includes the following steps:

In step S2101, the network device 102 sends first configuration information to the terminal 101.

In some embodiments, the network device 102 sends Radio Link Control (Radio Resource Control, RRC) information to the terminal 101, and the RRC information includes the first configuration information.

In some embodiments, the network device 102 sends RRC configuration information (RRCReconfiguration) to the terminal 101, and the RRC configuration information includes the first configuration information.

In some embodiments, the network device 102 sends RRC configuration information (RRCReconfiguration) to the terminal 101, and an IE CellGroupConfig in the RRC configuration information includes the first configuration information.

In some embodiments, an IE QSDR-Config is newly added in the IE CellGroupConfig to indicate the first configuration information, where QSDR is used to represent a flow synchronization delay report (QoS Synchronization Delay Report).

In some embodiments, the first configuration information is used to configure a trigger condition, and the trigger condition is used to trigger the terminal 101 to send synchronization information for at least two QoS flows to the network device 102.

In some embodiments, the synchronization information is synchronization information between two QoS flows in the same service.

In some embodiments, the synchronization information is synchronization information between two QoS flows that have a synchronization relationship in the same service.

In some embodiments, having a synchronous relationship means occurring simultaneously.

In some embodiments, having a synchronous relationship means that an interval between occurrence time is less than a set interval.

In some embodiments, different QoS flows having a synchronization relationship means that a time interval between corresponding data on a time axis is less than a set interval.

In an example, the set interval is 1 millisecond.

In an example, two QoS flows having a synchronization relationship in the same service are an audio data flow and a haptic data flow in the same virtual reality service.

In an example, two QoS flows having a synchronization relationship in the same service are a video data flow and a haptic data flow in the same virtual reality service.

In some embodiments, the first configuration information includes: identifiers of at least two QoS flows and at least one threshold.

In some embodiments, the first configuration information includes: identifiers of two QoS flows and one threshold.

In some embodiments, the one threshold in the first configuration information may be a symmetrical threshold.

The symmetrical threshold may be used to determine whether a time difference, by which data of a QoS flow A lags behind data of a QoS flow B, satisfies the trigger condition, and the symmetrical threshold may also be used to determine whether a time difference, by which the data of the QoS flow B lags behind the data of QoS flow A, satisfies the trigger condition.

In some embodiments, the time difference may be referred to as QoS flow synchronization delay.

In some embodiments, in the IE QSDR-Config, a domain qfi-Pair is used to indicate a first QOS flow and a second QOS flow, and a domain delayThreshold1 is used to indicate the one threshold. When the IE QSDR-Config includes only the domain delayThreshold1 and does not include a domain delayThreshold2, it means that the first configuration information includes only one threshold, that is, the threshold is a symmetrical threshold.

In some embodiments, the first configuration information includes: identifiers of two QoS flows and two thresholds.

In some embodiments, the two thresholds in the second configuration information may be asymmetric thresholds.

One of the two thresholds is used to determine whether the time difference, by which the data of QoS flow A lags behind the data of QoS flow B, satisfies the trigger condition;

the other of the two thresholds is used to determine whether the time difference, by which the data of QoS flow B lags behind the data of QoS flow A, satisfies the trigger condition.

In some embodiments, in the IE QSDR-Config, the domain qfi-Pair is used to indicate the first QoS flow and the second QoS flow, the domain delayThreshold1 is used to indicate a first threshold, and the domain delayThreshold2 is used to indicate a second threshold. The domains delayThreshold1 and delayThreshold2 are asymmetric thresholds. For example, the delayThreshold1 indicates the threshold for the time difference, by which QoS flow (qfi1) lags behind QoS flow (qfi2), and delayThreshold2 indicates the threshold for the time difference, by which QoS flow (qfi2) lags behind QoS flow (qfi1).

In some embodiments, the first configuration information includes: identifiers of at least three QoS flows and at least one threshold. Each threshold corresponds to a time difference of data between two QoS flows.

In some embodiments, the ranking of multiple thresholds is related to the ranking of identifiers of the multiple QoS flows.

In some embodiments, the identifiers of the two QoS flows corresponding to the threshold are determined based on the following parameter(s):
a position of the threshold in the ranking of the at least one threshold;
the number of identifiers for the at least three QoS flows;
the ranking of the identifiers of the at least three QoS flows.

In some embodiments, the ranking of multiple thresholds corresponds to the ranking of identifiers of multiple QoS flow according to a set rule.

In an example, the first configuration information includes three identifiers and three thresholds. The three identifiers are: QFI₁, QFI₂, and QFI₃. The three thresholds are: Th1, Th2, and Th3.

The first threshold Th1 corresponds to a threshold between QFI₁ and QFI₂;
the second threshold Th2 corresponds to a threshold between QFI₁ and QFI₃;
the third threshold Th2 corresponds to a threshold between QFI₂ and QFI₃.

In an example, the first configuration information includes four identifiers and six thresholds. The four identifiers are: QFI₁, QFI₂, QFI₃, and QFI₄. The six thresholds are: Th1, Th2, Th3, Th4, Th5, and Th6.

The first threshold Th1 corresponds to a synchronization threshold between QFI₁ and QFI₂;
the second threshold Th2 corresponds to a synchronization threshold between QFI₁ and QFI₃;
the third threshold Th3 corresponds to a synchronization threshold between QFI₁ and QFI₄;
the fourth threshold Th4 corresponds to a synchronization threshold between QFI₂ and QFI₃;
the fifth threshold Th5 corresponds to a synchronization threshold between QFI₂ and QFI₄;
the sixth threshold Th6 corresponds to a synchronization threshold between QFI₃ and QFI₄.

In some embodiments, the first configuration information is further used to configure enable indication information, and the enable indication information is used to indicate that the trigger condition is enabled.

In some embodiments, enable means addition or change.

In an example, a domain qsdr-ConfigToAddModList is used for trigger condition addition or change.

In this example, when qsdr-ConfigToAddModList has a suffix r19, it indicates that it is introduced in 3GPP Rel-19.

In some embodiments, the first configuration information is further used to configure the trigger condition and a disable indication. The disable indication is used to indicate that the trigger condition is disabled.

In some embodiments, disable means deletion.

In an example, a domain qsdr-ConfigToReleaseList is used for trigger condition removal, i.e., meaning that QFI-Pair included in it will no longer trigger related report(s).

**In step S2102,** the network device sends second configuration information to the terminal.

In some embodiments, the network device 102 sends Radio Link Control (Radio Resource Control, RRC) information to the terminal 101, and the RRC information includes the second configuration information.

In some embodiments, the network device 102 sends RRC configuration information (*RRCReconfiguration*) to the terminal 101, and the RRC configuration information includes the second configuration information.

In some embodiments, the network device 102 sends the RRC configuration information (*RRCReconfiguration*) to the terminal 101, and the IE *CellGroupConfig* in the RRC configuration information includes the second configuration information.

In some embodiments, the second configuration information is used to configure a duration of a timer.

In some embodiments, the timer is used to prohibit trigger condition(s) associated with at least one QoS flow, where the terminal has sent synchronization information for the at least one QoS flow and other QoS flow(s) within a first duration prior to the current time moment.

In some embodiments, the granularity corresponding to the timer may be a QoS flow, a DRB, an LCG, a MAC entity, or a terminal.

In an example, the granularity corresponding to the timer is a QoS flow, and the timer is used to disable a trigger condition related to QoS1. After the terminal reports the synchronization information of QoS1 relative to other QoS, the terminal may start the timer. During running of the timer, the terminal does not report the synchronization information for QoS1 relative to any other QoS.

In an example, the granularity corresponding to the timer is a DRB, and the timer is used to disable a trigger condition related to DRB1. After the terminal reports the synchronization information of a certain QoS included in DRB1 relative to other QoS, the timer may be started. During running of the timer, the terminal does not report the synchronization information for any QoS in DRB1 relative to any other QoS.

In an example, the granularity corresponding to the timer is an LCG, and the timer is used to disable a trigger condition related to LCG1. After the terminal reports the synchronization information of a certain QoS included in LCG1 relative to other QoS, the timer may be started. During running of the timer, the terminal does not report the synchronization information for any QoS in LCG1 relative to any other QoS.

**In step S2103,** the terminal determines a time difference.

In some embodiments, the terminal determines a time difference between different QoS flows indicated in the first configuration information.

In an example, the first configuration information includes an identifier of a first QoS flow, an identifier of a second QoS flow, and one threshold, and the terminal determines a time difference between the first QoS flow and the second QoS flow.

In some embodiments, the time difference between different QoS flows is determined based on whether data of the QoS flow(s) is sent to a Media Access Control (MAC) layer.

In some embodiments, first data of one QoS flow in the two QoS flows has been fully sent to the MAC layer, while second data of the other QoS flow in the two QoS flows has not been fully sent to the MAC layer, the first data corresponds to the second data, and the time difference between the two QoS flows is:
a difference between the current time and the time when the first data of one QoS flow in the two QoS flows is fully sent to the MAC layer;
or, a difference between the current time and the time when the first data of one QoS flow in the two QoS flows is sent over an air interface.

In some embodiments, the first data corresponding to the second data means that the first data and the second data are in a synchronization relationship.

For example, a video frame corresponds to a first QoS flow and a second QoS flow. The first data of the first QoS flow is a frame of audio data in the video frame data, and the second data of the second QoS flow is a frame of image data in the video frame data. If the first data of the first QoS flow has been fully sent to the MAC layer, but the second data of the second QoS flow has not been fully sent to the MAC layer, the time difference between the first QoS flow and the second QoS flow is determined to be: a difference between the current time and the time when the first data in the first QoS flow has been fully sent to the MAC layer.

In some embodiments, the first data, as a part of the first QoS flow, may reside in a DRB and may reside in an LCG.

Similarly, the second data, as a part of the second QoS flow, may reside in a DRB and may reside in an LCG.

In some embodiments, the time difference between two QoS flows is determined based on feedback information. The feedback information is used to indicate whether data of a QoS flow is successfully received.

In some embodiments, the feedback information includes at least one of:
Hybrid Automatic Repeat request-ACKnowledgment (HARQ-ACK) feedback information;
Radio Link layer Control Protocol Acknowledged Mode (RLC AM) status report;
Packet Data Convergence Protocol (PDCP) status report.

**In step S2104,** the terminal determines whether the trigger condition is satisfied.

In some embodiments, when the first configuration information includes the identifiers of two QoS flows and one threshold, the trigger condition being satisfied includes one of the following:
a time difference, by which data of a first QoS flow is later than data of a second QoS flow, being greater than or equal to the threshold;
the time difference, by which the data of the second QoS flow is later than the data of the first QoS flow, being greater than or equal to the threshold;
where the first QoS flow and the second QoS flow are two QoS flows corresponding to the identifiers of the two QoS flows.

In some embodiments, when the first configuration information includes the identifiers of two QoS flows and two thresholds, the trigger condition being satisfied includes one of the following:
the time difference, by which the data of the first QoS flow is later than the data of the second QoS flow, being greater than or equal to one of the two thresholds;
the time difference, by which the data of the second QoS flow is later than the data of the first QoS flow, being greater than or equal to the other of the two thresholds;
where the first QoS flow and the second QoS flow are two QoS flows corresponding to the identifiers of the two QoS flows.

In some embodiments,
when the first configuration information includes the identifiers of two QoS flows and two thresholds, the trigger condition being satisfied includes at least one of:
a time difference, by which data of a third QoS flow is later than data of a fourth QoS flow, being greater than or equal to the first one of the two thresholds;
a time difference, by which the data of the fourth QoS flow is later than the data of the third QoS flow, being greater than or equal to the second one of the two thresholds;
where the third QoS flow is a QoS flow with the smallest identifier among the two QoS flows corresponding to the identifiers of the two QoS flows, and the fourth QoS flow is a QoS flow with the largest identifier among the two QoS flows corresponding to the identifiers of the two QoS flows.

In some embodiments, when the first configuration information includes the identifiers of at least three QoS flows and at least one threshold, each threshold corresponds to a time difference of data between two QoS flows.

In some embodiments, the identifiers of the two QoS flows corresponding to the threshold are determined based on the following parameter(s):
a position of the threshold in the ranking of the at least one threshold;
the number of identifiers of the at least three QoS flows;
the ranking of the identifiers of the at least three QoS flows.

In some embodiments, the trigger condition being satisfied includes that: a time difference between any two QoS flows of three QoS flows corresponding to the identifiers of the at least three QoS flows is greater than or equal to a threshold corresponding to the any two QoS flows.

**In step S2105,** the terminal 101 sends the synchronization information to the network device 102.

In some embodiments, the synchronization information may be referred to as flow synchronization time difference information.

In some embodiments, in a case that the trigger condition is satisfied, the terminal sends the synchronization information to the network device.

In some embodiments, in a case that the trigger condition is satisfied, the terminal sends synchronization information corresponding to QoS flow(s) satisfying the trigger condition to the network device.

In some embodiments, the terminal 101 sends the synchronization information to the network device 102 at the granularity of a QoS flow.

In some embodiments, the terminal 101 sends the synchronization information corresponding to QoS flow(s) satisfying the trigger condition to the network device 102 at the granularity of a QoS flow.

In some embodiments, when the terminal 101 sends the synchronization information to the network device 102 at the granularity of a QoS flow, the synchronization information includes:
identifier(s) of QoS flow(s) satisfying the trigger condition;
information of a time difference between QoS flows satisfying the trigger conditions.

In some embodiments, the identifier of a QoS flow may be an absolute value of a QFI, or may be a relative index, i.e., an index obtained by arranging QFIs of all QoS flows for which synchronization information reporting is configured in an order (ascending or descending). The QoS flows for which synchronization information reporting is configured are QoS flows which are indicated via the first configuration information.

In some embodiments, the synchronization information may further include: the data volume(s) of the QoS flow(s) satisfying the trigger condition.

In some embodiments, the terminal 101 sends the synchronization information to the network device 102 at the granularity of a DRB.

In some embodiments, terminal 101 sends the synchronization information corresponding to QoS flow(s) satisfying the trigger condition to the network device 102 at the granularity of a DRB.

In some embodiments, when the terminal 101 sends the synchronization information to the network device 102 at the granularity of a Data Radio Bearer (DRB), the synchronization information includes:
an identifier of a DRB, where the DRB includes QoS flow(s) satisfying the trigger condition;
information of a time difference between QoS flows satisfying the trigger condition.

In some embodiments, the identifier of a DRB may be a DRB identity, or may be a relative index, i.e., an index obtained by arranging the DRB identifiers of all DRBs for which synchronization information reporting is configured in an order (ascending or descending); or, a bitmap may be used to indicate for which DRBs among all DRBs, for which synchronization information reporting is configured, the flow synchronization time difference needs to be reported.

In some embodiments, the synchronization information may further include: the data volume(s) of QoS flow(s) satisfying the trigger condition in the DRB.

In some embodiments, the terminal 101 sends the synchronization information to the network device 102 at the granularity of a Logical Channel Group (LCG).

In some embodiments, the terminal 101 sends the synchronization information corresponding to QoS flow(s) satisfying the trigger condition to the network device 102 at the granularity of an LCG.

In some embodiments, when the terminal 101 sends the synchronization information to the network device 102 at the granularity of an LCG, the synchronization information includes at least one of:
an identifier of an LCG, where the LCG includes QoS flow(s) satisfying the trigger condition;
information of a time difference between QoS flows satisfying the trigger condition.

In some embodiments, the identifier of an LCG may be an LCG identity, or may be a relative index, i.e., an index obtained by arranging the LCG identifiers of all LCGs for which synchronization information reporting is configured in an order (ascending or descending); or, a bitmap may be used to indicate, for which of the LCGs for which synchronization information reporting is configured, the flow synchronization information needs to be reported.

In some embodiments, the synchronization information may further include: the data volume(s) of QoS flow(s) satisfying the trigger condition in the LCG.

In some embodiments, information of the time difference included in the synchronization information is a time difference between different QoS flows.

In an example, the time difference is a specific value of a time delay.

In some embodiments, the information of the time difference included in the synchronization information is time difference-related information.

In an example, the time difference-related information is a difference between the time difference and a corresponding threshold.

In some embodiments, when the time differences between multiple pairs of QoS flows satisfy the trigger condition, the terminal 101 sends synchronization information corresponding to a pair of QoS flows to the network device 102, or the terminal 101 sends synchronization information corresponding to multiple pairs of QoS flows to the network device 102.

In some embodiments, when the time differences between multiple pairs of QoS flows satisfy the trigger condition, the synchronization information includes one piece of time difference information, which is calculated based on multiple time differences. The multiple time differences are the time differences between multiple pairs of QoS flows satisfying the trigger condition.

In an example, the one piece of time difference information is the maximum value, minimum value, average value, or intermediate value (i.e., median) of the multiple time differences.

In some embodiments, when the time differences between multiple pairs of QoS flows satisfy the trigger condition, the synchronization information includes multiple pieces of time difference information and multiple data volumes corresponding to the multiple pieces of time difference information, where the data quantities are related to the multiple pieces of time difference information.

In an example, the synchronization information reported by the UE includes a time difference 1 and a time difference 2, as well as a data volume 1 and a data volume 2. The data volume 1 may correspond to a data volume whose time difference satisfies a relationship "time difference 1 ≤time difference < time difference 2", while data volume 2 may correspond to a data volume whose time difference satisfies a relationship "time difference ≥ time difference 2".

In some embodiments, the terminal 101 sends RRC signaling to the network device 102, and the RRC signaling includes the synchronization information.

In some embodiments, the terminal 101 sends a Media Access Control Control Element (MAC CE) to the network device 102, and the MAC CE includes the synchronization information.

In some embodiments, the MAC CE that includes the synchronization information is called a flowing synchronization time difference MAC CE.

In some embodiments, an MAC header corresponding to the MAC CE indicates a new Logical Channel Identifier (LCID), and the new LCID is used to indicate that the MAC CE is used to send the synchronization information.

In some embodiments, the MAC header corresponding to the MAC CE includes a new field, and the new field is used to indicate that the MAC CE is used to send the synchronization information.

In an example, the field occupies one byte.

In some embodiments, the MAC header corresponding to the MAC CE includes a new eLCID, and the new eLCID is used to indicate that the MAC CE is used to send the synchronization information.

In an example, the new eLCID occupies one byte.

In some embodiments, the terminal 101 determines a priority of the MAC CE in logical channel prioritization as specified in a protocol.

In an example, the priority of the MAC CE in the logical channel prioritization is the same as the priority of the MAC for delay status report.

In some embodiments, in a case that the trigger condition is satisfied, the terminal 101 generates a report and sends the generated report to the network device 102. The report includes the synchronization information.

In some embodiments, in a case that the trigger condition is satisfied, the terminal 101 generates a report, marks the report as pending, and sends the pending report that has not been canceled to the network device.

In some embodiments, the sending of the generated report is cancelled if at least one of the following is fulfilled:
a Service Data Unit (SDU) associated with the report has been discarded;
a MAC PDU is transmitted, and the MAC PDU includes an SDU associated with the report;
a MAC PDU includes a MAC CE for transmitting the synchronization information, and the MAC CE includes an SDU associated with the report.

In some embodiments, when the terminal packages a MAC PDU, the terminal includes only one MAC CE including synchronization information in one MAC PDU.

In some embodiments, when the terminal packages a MAC PDU, the terminal includes only one MAC CE including the flow synchronization time difference in one MAC PDU.

In some embodiments, when a MAC PDU is capable of transmitting all SDUs associated with the pending report, the MAC entity cannot include a MAC CE containing synchronization information in the MAC PDU.

In some embodiments, when a MAC PDU is capable of transmitting all SDUs associated with the pending report, the MAC entity cannot include the flow synchronization time difference MAC CE in the MAC PDU.

In some embodiments, in a case of existence of at least one report that has been generated but not sent, if an Uplink Shared Channel (UL-SCH) for transmitting new data exists, and the UL-SCH is capable of transmitting the MAC CE after running Logical Channel Prioritization (LCP), the terminal generates the MAC CE; if the UL-SCH does not exist and the current processing procedure does not include a pending scheduling request triggered by a logical channel corresponding to the report, a scheduling request is triggered.

In some embodiments, the format of the MAC CE including the synchronization information is shown in Table 1.

**Table 1**

| | | | | | | | | |
|---|---|---|---|---|---|---|---|---|
| | | | | | | | | |
| | | | | | | | | |
| LCG₇ | LCG₆ | LCG₅ | LCG₄ | LCG₃ | LCG₂ | LCG₁ | LCG₀ | Oct 1 |
| BT 1 | R | QoS Flow Synchronization Delay 1 | | | | | | Oct 2 |
| Buffer Size 1 | | | | | | | | Oct 3 |
| ... | | | | | | | | |
| BT m | R | QoS Flow Synchronization Delay m | | | | | | Oct 2m |
| Buffer Size m | | | | | | | | Oct 2m+1 |

As shown in Table 1, the reporting granularity corresponding to the MAC CE is an LCG. The definitions of fields are as follows:

LCG field: when the specific value of the LCG field is 1, it indicates that the flow synchronization time difference information for the LCG is reported; when the specific value of the LCG field is 0, it indicates that the flow synchronization time difference information for the LCG is not reported.

Flow synchronization delay (QoS Flow Synchronization Delay) field: this field indicates a flow synchronization delay corresponding to a PDCP SDU corresponding to the LCG at the time of the first symbol of the first PUSCH transmission that includes this flow synchronization delay MAC CE. If there are multiple reports satisfying the trigger condition and they correspond to different delays, the value of this field is as described above (e.g., the maximum value). The length of the field may be 6 bits or other length(s).

BT field: this field is present only if the corresponding LCG is configured as *additionalBSR-TableAllowed;* otherwise, this field is reserved, i.e., the network device can ignore this field. If the BT field exists, when the specific value of the BT field is 1, it indicates that buffer sizes specified in Table 6.1.3.1-3 of 3GPP TS 38.321 are used to set the value of the buffer size field; when the specific value of the BT field is 0, it indicates that values of buffer sizes specified in Table 6.1.3.1-2 of 3GPP TS 38.321 are used.

Buffer capacity field: this field indicates the total amount of data satisfying the trigger condition in the LCG after the MAC PDU is constructed. If the corresponding LCG is configured with additionalBSR-TableAllowed, and the total amount of data in the LCG satisfying the trigger condition is within the buffer size range specified in Table 6.1.3.1-3 of 3GPP TS 38.321, the MAC entity should set the value of this field using the buffer sizes specified in Table 6.1.3.1-3; otherwise, the MAC entity uses the values in Table 6.1.3.1-2 of 3GPP TS 38.321. This field is expressed in byte. The length of this field may be 8 bits.

In some embodiments, the "Flow Synchronization Delay", "BT", and "Buffer Size" fields of the LCG should be reported in two consecutive octets. The three fields of different LCGs are included in the flow synchronization delay MAC CE in ascending order according to LCGᵢ.

The method for sending synchronization information according to the embodiments of the present disclosure may include at least one of steps S2101 to S2105. For example, step S2105 may be implemented as an independent embodiment, steps S2101 and S2105 may be implemented as an independent embodiment, and steps S2101, S2103, S2104, and S2105 may be implemented as an independent embodiment, but the present disclosure is not limited to the listed embodiments.

In some embodiments, any one or more of steps S2101 to S2104 are optional, and one or more of these steps may be omitted or substituted in different embodiments. For example, step S2102 may be omitted.

In some embodiments, the execution order of different steps may be changed.

In some embodiments, steps S2101 and S2102 may be combined into one step.

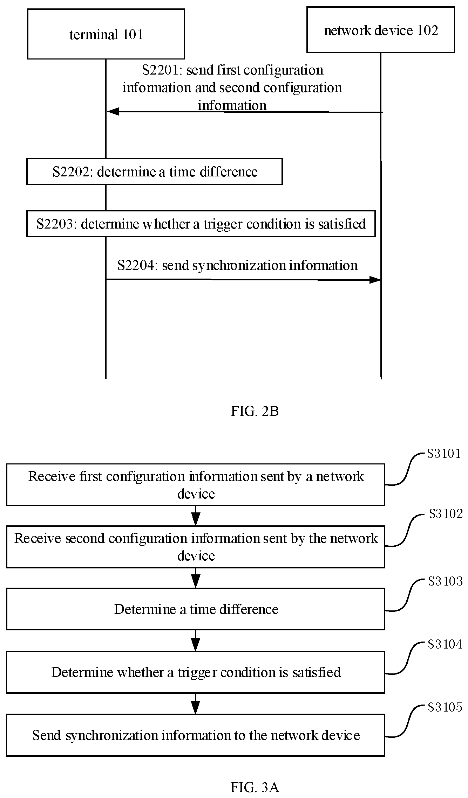

FIG. 2B is a schematic flowchart of a method for sending synchronization information according to an embodiment of the present disclosure. The method is applied to the terminal 101. As shown in FIG. 2B, the method includes the following steps:
**In step S2201,** the network device 102 sends first configuration information and second configuration information to the terminal 101.

In some embodiments, the network device 102 sends Radio Link Control (Radio Resource Control, RRC) information to the terminal 101, and the RRC information includes the first configuration information and second configuration information.

In some embodiments, the network device 102 sends RRC configuration information (*RRCReconfiguration*) to the terminal 101, and the RRC configuration information includes the first configuration information and second configuration information.

In some embodiments, the network device 102 sends RRC configuration information (*RRCReconfiguration*) to the terminal 101, and an IE *CellGroupConfig* in the RRC configuration information includes the first configuration information and second configuration information.

Regarding the optional implementations of step S2201, reference can be made to the optional implementations of steps S2101 and S2102 in FIG. 2A, as well as other related parts in the embodiments involved in FIG. 2A, and repeated descriptions will be omitted here.

**In step S2202,** the terminal 101 determines the time difference.

Regarding the optional implementations of step S2202, reference can be made to the optional implementations of step S2103 in FIG. 2A and other related parts in the embodiment involved in FIG. 2A, and repeated descriptions will be omitted here.

**In step S2203,** the terminal 101 determines whether the trigger condition is satisfied.

Regarding the optional implementations of step S2203, reference can be made to the optional implementations of step S2104 in FIG. 2A, and other related parts in the embodiments involved in FIG. 2A, and repeated descriptions will be omitted here.

**In step S2204,** the terminal 101 sends the synchronization information to the network device 102.

Regarding the optional implementations of step S2204, reference can be made to the optional implementations of step S2105 in FIG. 2A, as well as other related parts in the embodiments involved in FIG. 2A, and repeated descriptions will be omitted here.

The method for sending synchronization information according to the embodiments of the present disclosure may include at least one of steps S2201 to S2204. For example, step S2204 may be implemented as an independent embodiment, steps S2201 and S2204 may be implemented as an independent embodiment, and steps S2201, S2203 and S2204 may be implemented as an independent embodiment, but the present disclosure is not limited to the listed embodiments.

In some embodiments, any one or more of steps S2201 to S2204 are optional, and one or more of these steps may be omitted or substituted in different embodiments.

FIG. 3A is a schematic flowchart of a method for sending synchronization information according to an embodiment of the present disclosure. The method may be applied to the terminal 101. As shown in FIG. 3A, the method includes the following steps:

**In step S3101,** the first configuration information sent by the network device 102 is received.

Regarding the optional implementations of step S3101, reference can be made to the optional implementations of step S2101 in FIG. 2A and other related parts in the embodiments involved in FIG. 2A, and repeated descriptions will be omitted here.

**In step S3102,** the second configuration information sent by the network device 102 is received.

Regarding the optional implementations of step S3102, reference can be made to the optional implementations of step S2102 in FIG. 2A and other related parts in the embodiments involved in FIG. 2A, and repeated descriptions will be omitted here.

**In step S3103,** the time difference is determined.

Regarding the optional implementations of step S3103, reference can be made to the optional implementations of step S2103 in FIG. 2A and other related parts in the embodiments involved in FIG. 2A, and repeated descriptions will be omitted here.

**In step S3104,** whether the trigger condition is satisfied is determined.

Regarding the optional implementations of step S3104, reference can be made to the optional implementations of step S2104 in FIG. 2A and other related parts in the embodiments involved in FIG. 2A, and repeated descriptions will be omitted here.

**In step S3105,** the synchronization information is sent to the network device 102.

Regarding the optional implementations of step S3105, reference can be made to the optional implementations of step S2105 in FIG. 2A and other related parts in the embodiments involved in FIG. 2A, and repeated descriptions will be omitted here.

The method for sending synchronization information according to the embodiments of the present disclosure may include at least one of steps S3101 to S3105. For example, step S3105 may be implemented as an independent embodiment, steps S3101 and S3105 may be implemented as an independent embodiment, and steps S3101, S3103, S3104, and S3105 may be implemented as an independent embodiment, but the present disclosure is not limited to the listed embodiments.

In some embodiments, any one or more of steps S3101 to S3104 are optional, and one or more of these steps may be omitted or substituted in different embodiments. For example, step S3102 may be omitted.

In some embodiments, the execution order of different steps may be changed.

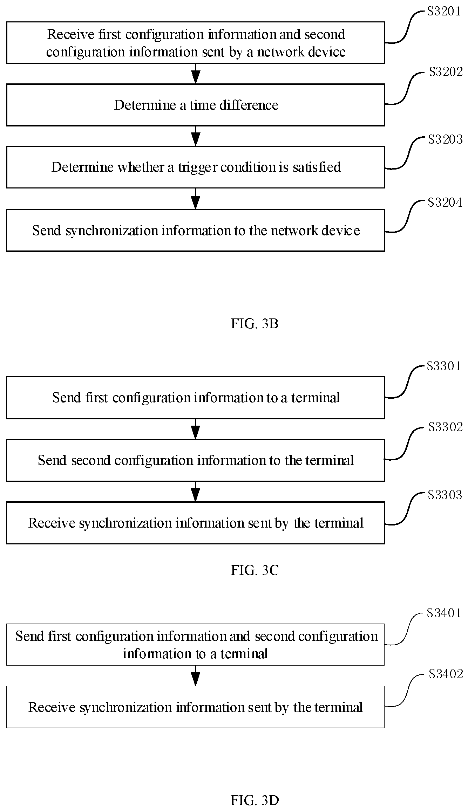

FIG. 3B is a schematic flowchart of a method for sending synchronization information according to an embodiment of the present disclosure. The method may be applied to the terminal 101. As shown in FIG. 3B, the method includes the following steps:

**In step S3201,** the first configuration information and the second configuration information sent by the network device 102 are received.

Regarding the optional implementations of step S3101, reference can be made to the optional implementations of step S2201 in FIG. 2B, and other related parts in the embodiments involved in FIG. 2B, and repeated descriptions will be omitted here.

**In step S3202,** the time difference is determined.

Regarding the optional implementations of step S3202, reference can be made to the optional implementations of step S2202 in FIG. 2B and other related parts in the embodiments involved in FIG. 2B, and repeated descriptions will be omitted here.

**In step S3203,** whether the trigger condition is satisfied is determined.

Regarding the optional implementations of step S3203, reference can be made to the optional implementations of step S2203 in FIG. 2B and other related parts in the embodiment involved in FIG. 2B, and repeated descriptions will be omitted here.

**In step S3204,** the synchronization information is sent to the network device 102.

Regarding the optional implementations of step S3204, reference can be made to the optional implementations of step S2204 in FIG. 2B and other related parts in the embodiments involved in FIG. 2B, and repeated descriptions will be omitted here.

The method for sending synchronization information according to the embodiments of the present disclosure may include at least one of steps S3201 to S3204. For example, step S3204 may be implemented as an independent embodiment, steps S3201 and S3204 may be implemented as an independent embodiment, and steps S3201, S3203, and S3204 may be implemented as an independent embodiment, but the present disclosure is not limited to the listed embodiments.

In some embodiments, any one or more of steps S3201 to S3204 are optional, and one or more of these steps may be omitted or substituted in different embodiments.

FIG. 3C is a schematic flowchart of a method for sending synchronization information according to an embodiment of the present disclosure. The method may be applied to the network device 102. As shown in FIG. 3C, the method includes the following steps:
**In step S3301,** the first configuration information is sent to the terminal 101.

Regarding optional implementations of step S3301, reference can be made to the optional implementations of step S2101 in FIG. 2A, and other related parts in the embodiments involved in FIG. 2A, and repeated descriptions will be omitted here.

**In step S3302,** the second configuration information is sent to the terminal 101.

Regarding optional implementations of step S3302, reference can be made to the optional implementations of step S2102 in FIG. 2A and other related parts in the embodiments involved in FIG. 2A, and repeated descriptions will be omitted here.

**In step S3303,** the synchronization information sent by the terminal 101 is received.

Regarding optional implementations of step S3303, reference can be made to the optional implementations of step S2105 in FIG. 2A, and other related parts in the embodiments involved in FIG. 2A, and repeated descriptions will be omitted here.

The method for sending synchronization information according to the embodiments of the present disclosure may include at least one of steps S3301 to S3303. For example, step S3303 may be implemented as an independent embodiment, and steps S3301 and S3303 may be implemented as an independent embodiment, but the present disclosure is not limited to the listed embodiments.

In some embodiments, any one or more of steps S3301 to S3303 are optional, and one or more of these steps may be omitted or substituted in different embodiments. For example, step S3302 may be omitted.

In some embodiments, the execution order of different steps may be changed.

FIG. 3D is a schematic flowchart of a method for sending synchronization information according to an embodiment of the present disclosure. The method may be applied to the network device 102. As shown in FIG. 3D, the method includes the following steps:

**In step S3401,** the first configuration information and the second configuration information are sent to the terminal 101.

Regarding the optional implementations of step S3401, reference can be made to the optional implementations of step S2201 in FIG. 2B, and other related parts in the embodiments involved in FIG. 2B, and repeated descriptions will be omitted here.

**In step S3402,** the synchronization information sent by the terminal 101 is received.

Regarding the optional implementations of step S3402, reference can be made to the optional implementations of step S2204 in FIG. 2B, and other related parts in the embodiment involved in FIG. 2B, and repeated descriptions will be omitted here.

The method for sending synchronization information according to the embodiments of the present disclosure may include at least one of steps S3401 to S3402. For example, step S3402 may be implemented as an independent embodiment, but the present disclosure is not limited to the listed embodiments.

In some embodiments, step S3401 may be omitted.

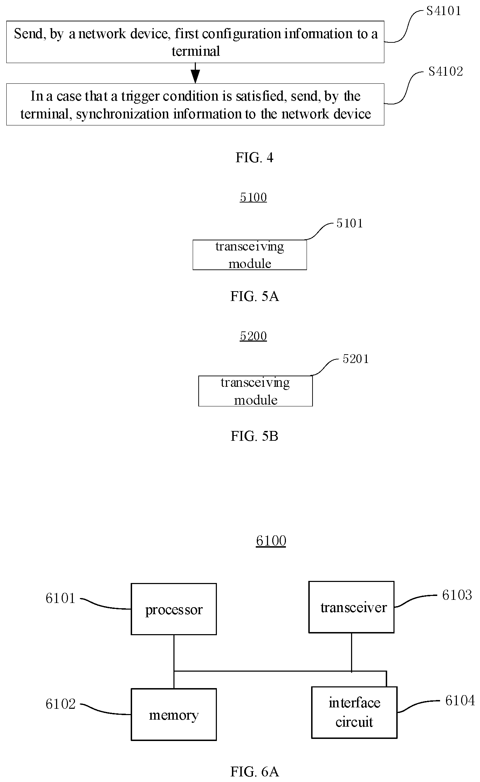

FIG. 4 is a schematic flowchart illustrating a method for establishing a connection according to an embodiment of the present disclosure. As shown in FIG. 4, the method includes the following steps:
**In step S4101,** the network device 102 sends the first configuration information to the terminal 101.

In some embodiments, the first configuration information is used to configure a trigger condition, and the trigger condition is used to trigger the terminal to send synchronization information for at least two QoS flows to the network device.

In some embodiments, the first configuration information includes: identifiers of at least two QoS flows and at least one threshold.

In some embodiments, the first configuration information includes identifiers of two QoS flows and one threshold.

In some embodiments, the first configuration information includes: an identifier of a first QoS flow, an identifier of a second QoS flow, and one threshold.

In some embodiments, the first configuration information includes: the identifier of the first QoS flow, the identifier of the second QoS flow, a first threshold, and a second threshold.

In some embodiments, the first configuration information includes identifiers of at least three QoS flows and at least one threshold.

In some embodiments, the identifiers of the two QoS flows corresponding to the threshold are determined based on the following parameter(s):
a position of the threshold in the ranking of the at least one threshold;
the number of identifiers of the at least three QoS flows;
the ranking of the identifiers of the at least three QoS flows.

**In step S4102,** in a case that the trigger condition is satisfied, the terminal 101 sends the synchronization information to the network device.

In some embodiments, when the first configuration information includes the identifiers of two QoS flows and one threshold, the trigger condition being satisfied includes one of the following:
a time difference, by which data of the first QoS flow is later than data of the second QoS flow, being greater than or equal to the threshold;
a time difference, by which the data of the second QoS flow is later than the data of the first QoS flow, being greater than or equal to the threshold;
where the first QoS flow and the second QoS flow are two QoS flows corresponding to the identifiers of the two QoS flows.

In some embodiments, when the first configuration information includes the identifiers of two QoS flows and two thresholds, the trigger condition being satisfied includes one of the following:
a time difference, by which the data of the first QoS flow is later than the data of the second QoS flow, being greater than or equal to one of the two thresholds;
a time difference, by which the data of the second QoS flow is later than the data of the first QoS flow, being greater than or equal to the other of the two thresholds;
where the first QoS flow and the second QoS flow are two QoS flows corresponding to the identifiers of the two QoS flows.

In some embodiments, when the first configuration information includes the identifiers of two QoS flows and two thresholds, the trigger condition being satisfied includes at least one of:
a time difference, by which data of a third QoS flow is later than data of a fourth QoS flow, being greater than or equal to the first one of the two thresholds;
a time difference, by which the data of the fourth QoS flow is later than the data of the third QoS flow, being greater than or equal to the second one of the two thresholds;
where the third QoS flow is a QoS flow with the smallest identifier among the two QoS flows corresponding to the identifiers of the two QoS flows, and the fourth QoS flow is a QoS flow with the largest identifier among the two QoS flows corresponding to the identifiers of the two QoS flows.

In some embodiments, when the first configuration information includes the identifiers of at least three QoS flows and at least one threshold, each threshold corresponds to a time difference of data between two QoS flows.

In some embodiments, the identifiers of the two QoS flows corresponding to the threshold are determined based on the following parameter(s):
a position of the threshold in the ranking of the at least one threshold;
the number of identifiers of the at least three QoS flows;
the ranking of the identifiers of the at least three QoS flows.

In some embodiments, the trigger condition being satisfied includes: a time difference between any two of three QoS flows corresponding to the identifiers of the at least three QoS flows is greater than or equal to a threshold corresponding to the any two QoS flows.

In some embodiments, the method further includes:
determining a time difference between different QoS flows based on whether the data of the QoS flows is sent to a Media Access Control (MAC) layer;
or, determining the time difference between the different QoS flows based on feedback information, where the feedback information is used to indicate whether the data of the QoS flows is successfully received.

In some embodiments, first data of one of the two QoS flows has been fully sent to the MAC layer, while second data of the other of the two QoS flows has not been fully sent to the MAC layer, the first data corresponds to the second data, and the time difference between the two QoS flows is:
a difference between the current time and the time when the first data of one of the two QoS flows is fully sent to the MAC layer;
or, a time difference between the current time and the time when the first data of one of the two QoS flows is sent over an air interface. In some embodiments, the time difference is determined based on feedback information, the feedback information is used to indicate whether the data of a QoS flow is successfully received, and the feedback information includes at least one of:
   Hybrid Automatic Repeat Request-ACKnowledgment HARQ ACK feedback information;
   Radio Link Layer Control Protocol Acknowledged Mode RLC AM status report;
   Packet Data Convergence Protocol PDCP status Report.

In some embodiments, the synchronization information includes at least one of:
identifier(s) of QoS flow(s) satisfying the trigger condition;
information of a time difference between QoS flows satisfying the trigger condition;
the data volume(s) of the QoS flow(s) satisfying the trigger condition.

In some embodiments, the synchronization information includes at least one of:
an identifier of a Data Radio Bearer DRB, where the DRB includes QoS flow(s) satisfying the trigger condition;
information of a time difference between QoS flows satisfying the trigger condition;
the data volume(s) of the QoS flow(s) satisfying the trigger condition in the DRB.

In some embodiments, the synchronization information includes at least one of:
an identifier of a Logical Channel Group (LCG), where the LCG includes QoS flow(s) satisfying the trigger condition;
information of a time difference between QoS flows satisfying the trigger condition;
the data volume(s) of the QoS flow(s) satisfying the trigger condition in the LCG.

In some embodiments, the information of the time difference is a time difference between different QoS flows, or the information of the time difference information is time difference-related information, and the time difference-related information is a difference between the time difference and a corresponding threshold.

In some embodiments, when the time differences between multiple pairs of QoS flows satisfy the trigger condition, the synchronization information includes one piece of time difference information, which is calculated based on multiple time differences, where the multiple time differences are the time differences between multiple pairs of QoS flows satisfying the trigger condition.

In some embodiments, when the time differences between multiple pairs of QoS flows satisfy the trigger condition, the synchronization information includes multiple pieces of time difference information and multiple data volumes corresponding to the multiple pieces of time difference information, where the data volumes are related to the multiple pieces of time difference information.

In some embodiments, the first configuration information is further used to configure enable indication information, which is used to indicate that the trigger condition is enabled.

In some embodiments, the first configuration information is further used to configure the trigger condition and a disable indication, where the disable indication is used to indicate that the trigger condition is disabled.

In some embodiments, the method further includes:
receiving second configuration information sent by the network device, where the second configuration information is used to configure a duration of a timer, the timer is used to prohibit a trigger condition related to at least one QoS flow, and the terminal has sent synchronization information for the at least one QoS flow and other QoS flow(s) within a first duration prior to the current time moment.

In some embodiments, Radio Link Control (RRC) signaling is sent, where the RRC signaling includes the synchronization information.

In some embodiments, a Media Access Control Control Element (MAC CE) is sent, where the MAC CE includes the synchronization information.

In some embodiments, a MAC header corresponding to the MAC CE indicates a new Logical Channel Identifier (LCID), and the new LCID is used to indicate that the MAC CE is used to send the synchronization information.

In some embodiments, the MAC header corresponding to the MAC CE includes a new eLCID, and the new eLCID is used to indicate that the MAC CE is used to send the synchronization information.

In some embodiments, the method further includes:
determining a priority of the MAC CE in logical channel prioritization as specified in a protocol.

In some embodiments, sending the synchronization information to the network device in a case that the trigger condition is satisfied includes:
in a case that the trigger condition is satisfied, generating a report, where the report includes the synchronization information; and
sending the generated report to the network device.

In some embodiments, the method further includes:
cancelling sending of the generated report if at least one of the following is fulfilled:
a Service Data Unit (SDU) associated with the report has been discarded;
a MAC PDU is transmitted, and the MAC PDU includes an SDU associated with the report;
a MAC PDU includes a MAC CE for transmitting the synchronization information, and the MAC CE includes an SDU associated with the report.

In some embodiments, the method further includes:
in a case of existence of at least one report has been generated but not sent, if an Uplink Shared Channel (UL-SCH) for transmitting new data exists and the UL-SCH is capable of transmitting the MAC CE after running Logical Channel Prioritization (LCP), generating the MAC CE; if the UL-SCH does not exist and the current processing procedure does not include a pending scheduling request triggered by a logical channel corresponding to the report, triggering a scheduling request.

Embodiments of the present disclosure further provide an apparatus for implementing any one of the above methods. For example, an apparatus is provided. The apparatus includes units or modules for implementing the steps performed by the terminal in any one of the above methods. As another example, another apparatus is provided. The apparatus includes units or modules for implementing the steps performed by a network device (e.g., an access network device, a core network function node, a core network device, etc.) in any one of the above methods.

It should be understood that the division of units or modules in the above apparatus is only a logical functional division. In actual implementations, the units or modules may be fully or partially integrated into a physical entity, or the units or modules may be physically separated. Furthermore, the units or modules in the apparatus may be implemented in a form of a processor invoking software. For example, the apparatus includes a processor connected to a memory, and instructions are stored in the memory. The processor invokes the instructions stored in the memory to implement any one of the above methods or to implement the functions of the units or modules in the above apparatus. The processor may be, for example, a general-purpose processor, such as a Central Processing Unit (CPU) or a microprocessor, and the memory may be a memory within the apparatus, or a memory outside the apparatus. Alternatively, the units or modules in the apparatus may be implemented in a form of hardware circuit(s). The functions of a part or all of the units or modules may be implemented through a design of the hardware circuit(s). The hardware circuit(s) may be understood as one or more processors. For example, in an implementation, the hardware circuit is an Application-Specific Integrated Circuit (ASIC), and the functions of a part or all of the units or modules can be implemented through the design of a logical relationship between components within the circuit. For example, in another implementation, the hardware circuit may be implemented using a Programmable Logic Device (PLD), such as a Field-Programmable Gate Array (FPGA), which may include a large number of logic gate circuits. A connection relationship between the logic gate circuits is configured through a configuration file, achieving the functions of a part or all of the units or modules. All units or modules of the apparatus may be implemented entirely through the form of processor invoking software, or may be implemented entirely through the form of hardware circuit(s), or may be implemented partially through the form of processor invoking software, with the remaining part implemented through the form of hardware circuit(s).

In an embodiment of the present disclosure, the processor is a circuit with signal processing capabilities. In an implementation, the processor may be a circuit with instruction read and execution capabilities, such as a Central Processing Unit (CPU), a microprocessor, a Graphics Processing Unit (GPU) (which may be understood as a microprocessor), or a Digital Signal Processor (DSP), etc. In another implementation, the processor may implement certain functions through a logical relationship between hardware circuits. The logical relationship between the hardware circuits is fixed or reconfigurable. For example, the processor is a hardware circuit implemented using an Application-Specific Integrated Circuit (ASIC) or a Programmable Logic Device (PLD), such as an FPGA. In a reconfigurable hardware circuit, a procedure in which the processor loads a configuration file to realize the configuration of the hardware circuit can be understood as a procedure in which the processor loads instructions to implement the functions of a part or all of the above units or modules. Furthermore, it may also be a hardware circuit designed for artificial intelligence, which may be understood as an ASIC, such as a Neural Network Processing Unit (NPU), a Tensor Processing Unit (TPU), or a Deep learning Processing Unit (DPU), etc.

FIG. 5A is a schematic diagram of the structure of a communication device according to an embodiment of the present disclosure. The communication device is applied to the terminal 101. As shown in FIG. 5A, the terminal 101 may include a transceiving module 5101. In some embodiments, the transceiving module 5101 is configured to: receive first configuration information sent by a network device, where the first configuration information is used to configure a trigger condition, the trigger condition is used to trigger the terminal to send synchronization information for at least two QoS flows to the network device; and in a case that the trigger condition is satisfied, send the synchronization information for the at least two QoS flows to the network device. Optionally, the transceiving module is used to perform at least one of the communication steps such as sending and/or receiving performed by terminal 101 in any one of the above methods, which will not be elaborated here.

FIG. 5B is a schematic diagram of the structure of a communication device according to an embodiment of the present disclosure. The communication device is applied to the network device 102. As shown in Fig. 5B, the network device 102 may include a transceiving module 5201. In some embodiments, the transceiving module 5201 is configured to: send first configuration information to a terminal, where the first configuration information is used to configure a trigger condition, and the trigger condition is used to trigger the terminal to send synchronization information for at least two QoS flows to the network device; and receive the synchronization information for the at least two QoS flows sent by the terminal. Optionally, the transceiving module is used to perform at least one of the communication steps such as sending and/or receiving performed by the second device 102 in any one of the above methods, which will not be elaborated here.

In some embodiments, the transceiving module may include a sending module and/or a receiving module, which may be separate or integrated. Optionally, the transceiving module may be interchangeable with a transceiver.

FIG. 6A is a schematic diagram of the structure of a communication device 6100 according to an embodiment of the present disclosure. The communication device 6100 may be a first device (e.g., a terminal, user equipment, IoT device, etc.), a second device (e.g., an intermediate node), a third device (e.g., an access network device, core network device, etc.), or a chip, chip system, or processor that implements any one of the above methods performed by a network device; it can also be a chip, chip system, or processor that implements any one of the above methods performed by a terminal. The communication device 6100 can be used to implement the methods described in the above method embodiments; for details, please refer to the descriptions in the above method embodiments.

As shown in FIG. 6A, the communication device 6100 includes one or more processors 6101. The processor 6101 may be a general-purpose processor or a dedicated processor, such as a baseband processor or a central processor. The baseband processor may be used to process communication protocols and communication data, while the central processor may be used to control a communication apparatus (e.g., a base station, baseband chip, terminal device, terminal device chip, DU or CU, etc.), execute programs, and process program data. The communication device 6100 is used to execute any one of the above methods.

In some embodiments, the communication device 6100 further includes one or more memories 6102 for storing instructions. Optionally, all or part of the memories 6102 may also be located outside the communication device 6100.

In some embodiments, the communication device 6100 further includes one or more transceivers 6103. When the communication device 6100 includes one or more transceivers 6103, the transceivers 6103 perform at least one of the communication steps such as sending and/or receiving in the above methods, and the processor 6101 performs at least one of the other steps.

In some embodiments, a transceiver may include a receiver and/or a sender, which may be separate or integrated. Optionally, the terms "transceiver", "transceiving unit", "transceiving machine", "transceiving circuit", etc., may be used interchangeably; the terms "sender", "sending unit", "sending machine", "sending circuit", etc., may be used interchangeably; and the terms "receiver", "receiving unit", "receiving machine", "receiving circuit", etc., may be used interchangeably.

In some embodiments, the communication device 6100 may include one or more interface circuits 6104. Optionally, the interface circuit 6104 is connected to the memory 6102, and the interface circuit 6104 can be used to receive signals from the memory 6102 or other device(s), and can be used to send signals to the memory 6102 or other devices. For example, the interface circuit 6104 can read instructions stored in the memory 6102 and send the instructions to the processor 6101.

The communication device 6100 described in the above embodiments may be a network device or a terminal, but the scope of the communication device 6100 described in the present disclosure is not limited thereto, and the structure of the communication device 6100 may not be limited by FIG. 6A. The communication device may be a standalone device or a part of a larger device. For example, the communication device may be: (1) a standalone integrated circuit IC, or chip, or chip system or subsystem; (2) a collection of one or more ICs, optionally, the IC collection may also include storage components for storing data and programs; (3) an ASIC, such as a modem; (4) a module that can be embedded in other device(s); (5) a receiver, terminal device, smart terminal device, cellular phone, wireless device, handheld device, mobile unit, vehicle device, network device, cloud device, artificial intelligence device, etc.; (8) others, etc.

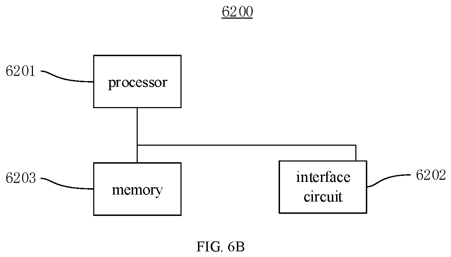

FIG. 6B is a schematic diagram of the structure of a chip 6200 provided in an embodiment of the present disclosure. For cases where the communication device 6200 can be a chip or a chip system, please refer to the schematic diagram of the chip 6200 shown in FIG. 6B, but it is not limited thereto.

The chip 6200 includes one or more processors 6201, which are used to perform any one of the above methods.

In some embodiments, the chip 6200 further includes one or more interface circuits 6202. Optionally, the interface circuit 6202 is connected to memory 6203, and the interface circuit 6202 can be used to receive signals from memory 6203 or other device(s), and the interface circuit 6202 can be used to send signals to memory 6203 or other device(s). For example, the interface circuit 6202 can read instructions stored in memory 6203 and send the instructions to processor 6201.

In some embodiments, the interface circuit 6202 performs at least one of the communication steps such as sending and/or receiving in the above methods, and the processor 6201 performs at least one of the other steps.

In some embodiments, the terms "interface circuit", "interface", "transceiving pin", "transceiver", etc., can be used interchangeably.

In some embodiments, the chip 6200 further includes one or more memories 6203 for storing instructions. Optionally, all or part of the memories 6203 may be located outside of the chip 6200.

The present disclosure also provides a storage medium storing instructions. When the instructions are run on the communication device 6100, the communication device 6100 is caused to perform any one of the above methods. Optionally, the storage medium is an electronic storage medium. Optionally, the storage medium is a computer-readable storage medium, but not limited thereto; it may also be a storage medium readable by other device(s). Optionally, the storage medium may be a non-transitory storage medium, but not limited thereto; it may also be a temporary storage medium.

The present disclosure also provides a program product. When the program product is executed by the communication device 6100, the communication device 6100 is caused to perform any one of the above methods. Optionally, the program product is a computer program product.

The present disclosure also provides a computer program. When the computer program is run on a computer, the computer is caused to perform any one of the above methods.

### Industrial applicability

The present disclosure allows the terminal to report synchronization information at reasonable timing, thus saving signaling overhead compared to a periodic reporting manner.

## Claims

1. A method for sending synchronization information, performed by a terminal, the method comprising:
receiving first configuration information sent by a network device, wherein the first configuration information is used to configure a trigger condition, and the trigger condition is used to trigger the terminal to send synchronization information for at least two Quality of Service QoS flows to the network device; and
in a case that the trigger condition is satisfied, sending the synchronization information for the at least two Quality of Service QoS flows to the network device.

2. The method according to claim 1, wherein the first configuration information comprises: identifiers of the at least two QoS flows and at least one threshold.

3. The method according to claim 2, wherein when the first configuration information comprises identifiers of two QoS flows and one threshold, the trigger condition being satisfied comprises one of:
a time difference, by which data of a first QoS flow is later than data of a second QoS flow, being greater than or equal to the threshold;
a time difference, by which the data of the second QoS flow is later than the data of the first QoS flow, being greater than or equal to the threshold;
wherein the first QoS flow and the second QoS flow are two QoS flows corresponding to the identifiers of the two QoS flows.

4. The method according to claim 2, wherein when the first configuration information comprises identifiers of two QoS flows and two thresholds, the trigger condition being satisfied comprises one of:
a time difference, by which data of a first QoS flow is later than data of a second QoS flow, being greater than or equal to one of the two thresholds;
a time difference, by which the data of the second QoS flow is later than the data of the first QoS flow, being greater than or equal to the other one of the two thresholds;
wherein the first QoS flow and the second QoS flow are two QoS flows corresponding to the identifiers of the two QoS flows.

5. The method according to claim 2, wherein when the first configuration information comprises identifiers of two QoS flows and two thresholds, the trigger condition being satisfied comprises at least one of:
a time difference, by which data of a third QoS flow is later than data of a fourth QoS flow, being greater than or equal to the first one of the two thresholds;
a time difference, by which the data of the fourth QoS flow is later than the data of the third QoS flow, being greater than or equal to the second one of the two thresholds;
wherein the third QoS flow is a QoS flow with the smallest identifier among two QoS flows corresponding to the identifiers of the two QoS flows, and the fourth QoS flow is a QoS flow with the largest identifier among the two QoS flows corresponding to the identifiers of the two QoS flows.

6. The method according to claim 2, wherein when the first configuration information comprises identifiers of at least three QoS flows and at least one threshold, each threshold corresponds to a time difference of data between two QoS flows.

7. The method according to claim 6, wherein identifiers of the two QoS flows corresponding to the threshold are determined according to the following parameter:
a position of the threshold in ranking of the at least one threshold;
the number of identifiers of the at least three QoS flows;
ranking of the identifiers of the at least three QoS flows.

8. The method according to claim 6, wherein the trigger condition being satisfied comprises: a time difference between any two QoS flows among three QoS flows corresponding to the identifiers of the at least three QoS flows is greater than or equal to a threshold corresponding to the any two QoS flows.

9. The method according to any one of claims 6 to 8, wherein:
first data of one QoS flow in the two QoS flows has been fully sent to a MAC layer, second data of the other QoS flow in the two QoS flows has not been fully sent to the MAC layer, the first data corresponds to the second data, and a time difference between the two QoS flows is:
a difference between current time and time when the first data in the one QoS flow in the two QoS flows is fully sent to the MAC layer;
or, a difference between the current time and time when the first data in the one QoS flow in the two QoS flows is sent over an air interface.

10. The method according to any one of claims 6 to 8, wherein the time difference is determined according to feedback information, the feedback information is used to indicate whether data of the QoS flow is successfully received, and the feedback information comprises at least one of:
Hybrid Automatic Repeat Request-ACKnowledgment HARQ ACK feedback information;
Radio Link Layer Control Protocol Acknowledged Mode RLC AM status report;
Packet Data Convergence Protocol PDCP status Report.

11. The method according to any one of claims 1 to 10, wherein the synchronization information comprises at least one of:
an identifier of a QoS flow satisfying the trigger condition;
information of a time difference between QoS flows satisfying the trigger condition;
a data volume of the QoS flow satisfying the trigger condition.

12. The method according to any one of claims 1 to 10, wherein the synchronization information comprises at least one of:
an identifier of a Data Radio Bearer DRB, wherein the DRB comprises a QoS flow satisfying the trigger condition;
information of a time difference between QoS flows satisfying the trigger condition;
a data volume of a QoS flow satisfying the trigger condition in the DRB.

13. The method according to any one of claims 1 to 10, wherein the synchronization information comprises at least one of:
an identifier of a Logical Channel Group LCG, wherein the LCG comprises a QoS flow satisfying the trigger condition;
information of a time difference between QoS flows satisfying the trigger condition;
a data volume of the QoS flow satisfying the trigger condition in the LCG.

14. The method according to any one of claims 11 to 13, wherein the information of the time difference is a numerical value of the time difference between the QoS flows satisfying the trigger condition, or the information of the time difference is time difference-related information, wherein the time difference-related information is a difference between the time difference and a corresponding threshold.

15. The method according to any one of claims 11 to 13, wherein the synchronization information comprises one piece of time difference information, and the one piece of time difference information is calculated according to multiple time differences.

16. The method according to any one of claims 11 to 13, wherein the synchronization information comprises multiple pieces of time difference information and multiple data volumes corresponding to the pieces of time difference information.

17. The method according to any one of claims 1 to 16, wherein the first configuration information is further configured to configure enable indication information, and the enable indication information is used to indicate that the trigger condition is enabled.

18. The method according to any one of claims 1 to 16, wherein the first configuration information is further configured to configure the trigger condition and a disable indication, and the disable indication is used to indicate that the trigger condition is disabled.

19. The method according to any one of claims 1 to 18, further comprising:
receiving second configuration information sent by the network device, wherein the second configuration information is used to configure a duration of a timer, the timer is used to prohibit a trigger condition related to at least one QoS flow, and the terminal has sent synchronization information for the at least one QoS flow and other QoS flow within a first duration prior to a current time moment.

20. The method according to any one of claims 1 to 19, wherein sending the synchronization information for the at least two Quality of Service QoS flows to the network device comprises:
sending Radio Link Control RRC signaling, wherein the RRC signaling comprises the synchronization information for the at least two Quality of Service QoS flows.

21. The method according to any one of claims 1 to 19, wherein sending the synchronization information for the at least two Quality of Service QoS flows to the network device comprises:
sending a Media Access Control Control Element MAC CE, wherein the MAC CE comprises the synchronization information for the at least two Quality of Service QoS flows.

22. The method according to claim 21, wherein a MAC header corresponding to the MAC CE indicates a new Logical Channel Identifier LCID, and the new LCID is used to indicate that the MAC CE is used to send the synchronization information for the at least two Quality of Service QoS flows.

23. The method according to claim 22, wherein the MAC header corresponding to the MAC CE comprises a new eLCID, and the new eLCID is used to indicate that the MAC CE is used to send the synchronization information for the at least two Quality of Service QoS flows.

24. The method according to claim 21, further comprising:
determining a priority of the MAC CE in logical channel prioritization as specified in a protocol.

25. The method according to any one of claims 1 to 24, wherein sending the synchronization information for the at least two Quality of Service QoS flows to the network device in a case that the trigger condition is satisfied comprises:
in a case that the trigger condition is satisfied, generating a report, wherein the report comprises the synchronization information for the at least two Quality of Service QoS flows; and
sending the generated report to the network device.

26. The method according to claim 25, further comprising:
cancelling sending of the generated report in a case that one of the following is fulfilled:
a Service Data Unit SDU associated with the report having been discarded;
a MAC PDU being transmitted, and the MAC PDU comprising an SDU associated with the report;
a MAC PDU comprising a MAC CE for transmitting the synchronization information, and the MAC CE comprising an SDU associated with the report.

27. The method according to claim 21, further comprising:
in a case of existence of at least one report that has been generated but not sent, if an Uplink Shared Channel UL-SCH for transmitting new data exists and the UL-SCH is capable of transmitting the MAC CE after running of Logical Channel Prioritization LCP, generating the MAC CE; if the UL-SCH does not exist and a current processing procedure does not comprise a pending scheduling request triggered by a logical channel corresponding to the report, triggering a scheduling request.

28. A method for receiving synchronization information, performed by a network device, the method comprising:
sending first configuration information to a terminal, wherein the first configuration information is used to configure a trigger condition, and the trigger condition is used to trigger the terminal to send synchronization information for at least two Quality of Service QoS flows to the network device; and
receiving the synchronization information for the at least two Quality of Service QoS flows sent by the terminal.

29. The method according to claim 28, wherein the first configuration information is further configured to configure enable indication information, and the enable indication information is used to indicate that the trigger condition is enabled.

30. The method according to claim 28, wherein the first configuration information is further configured to configure the trigger condition and a disable indication, and the disable indication is used to indicate that the trigger condition is disabled.

31. The method according to any one of claims 28 to 30, further comprising:
sending second configuration information to the terminal, wherein the second configuration information is used to configure a duration of a timer, and the timer is used to prohibit a trigger condition associated with at least one QoS flow.

32. The method according to any one of claims 28 to 31, wherein receiving the synchronization information for at least two Quality of Service QoS flows sent by the terminal comprises:
receiving Radio Link Control RRC signaling, wherein the RRC signaling comprises the synchronization information for the at least two Quality of Service QoS flows.

33. The method according to any one of claims 28 to 32, wherein receiving the synchronization information sent by the terminal comprises:
receiving a Media Access Control Control Element MAC CE, wherein the MAC CE comprises the synchronization information for the at least two Quality of Service QoS flows.

34. A communication apparatus configured in a terminal, the apparatus comprising:
a transceiving module configured to:
receive first configuration information sent by a network device, wherein the first configuration information is used to configure a trigger condition, and the trigger condition is used to trigger the terminal to send synchronization information for at least two Quality of Service QoS flows to the network device; and
in a case that the trigger condition is satisfied, send the synchronization information for the at least two Quality of Service QoS flows to the network device.

35. A communication apparatus configured in a network device, the apparatus comprising:
a transceiving module configured to:
send first configuration information to a terminal, wherein the first configuration information is used to configure a trigger condition, and the trigger condition is used to trigger the terminal to send synchronization information for at least two Quality of Service QoS flows to the network device; and
receive the synchronization information for the at least two Quality of Service QoS flows sent by the terminal.

36. A communication device, comprising a processor and a memory, wherein:
the memory is used to store computer programs; and
the processor is used to execute the computer programs to implement the method according to any one of claims 1-27.

37. A computer-readable storage medium storing instructions, wherein when the instructions are called and executed by a processor, the processor is caused to perform the method according to any one of claims 1-27.
